# EUROPEAN PATENT APPLICATION

(11) **EP 0 766 013 A1**
(43) Date of publication of application: **02.04.1997**
(21) Application number: 96306698.0
(22) Date of filing: 16.09.1996
(51) Int. Cl.: F16B 19/10

(54) **Improved blind rivet**

(30) Priority: 23.09.1995 GB 9519474
(71) Applicant: EMHART INC., Newark, Delaware 19711 (US)
(72) Inventor: Morris, Stephen, Great Barr, Birmingham B43 7PF (GB); Wynn, John, Sutton Coldfield, West Midlands B76 8BP (GB); Osborne, Michael, Sutton Coldfield, West Midlands B73 6LP (GB)
(74) Representative: Moffat, John Andrew

(57) **Abstract**

A load spreading rivet (1) is shown comprising a mandrel (2) and a sleeve with a flange at one end and slots extending along the rivet sleeve (3) from the flange to which a plastics moulding (10) has been applied. The moulding extends between and separates the mandrel from the end of the sleeve having the flange, and also extends along and fills the slots (12) in the rivet sleeve (3). This provides for greater sealing capabilities than known rivets.

## Description

The invention relates to an improved blind rivet of the kind comprising a rivet sleeve and a pulling mandrel, and in particular to such a blind rivet assembly with improved sealing qualities.

Blind rivet assemblies can be used to secure two workpieces together, particularly where the side remote from the operator (the blind side) is inaccessible to the operator. In such cases it is often desirable to seal one side from the other to prevent the ingress of moisture.

Previously to effect such a seal a closed end blind rivet assembly has been used or a separate plastic sac enclosing the whole of the outside of the rivet body. On setting the blind side of the rivet sleeve collapses securing the workpieces together. There will be a degree of hole filling as the rivet sleeve collapses. However, this is not always sufficient to produce an effective seal between the rivet sleeve and the workpieces. Indeed, this is particularly the case if a user attempts to join two workpieces whose combined thickness is at the maximum of the grip range of a particular rivet assembly.

To solve this problem, a closed end rivet has been developed with a washer forming a seal under a flange of the rivet sleeve. Thus on setting, even if a gap remains after setting between the workpieces and the rivet sleeve, ingress of moisture is prevented by the sealing of any gap between the rivet assembly flange and the workpiece.

It may be seen that other forms of rivet such as load spreading rivets, characterised by a slotted rivet sleeve which forms collapsed legs on setting, may be used with such a washer since the gap between the workpiece and the flange will be sealed to prevent ingress of moisture. Such rivets also have a larger grip range than closed end rivets.

A problem with such load spreading rivets, and, indeed with all non closed end blind rivets, is that there remains the possibility of an imperfect seal forming between the pulling mandrel and the rivet sleeve allowing the ingress of water through the centre of the rivet. This is particularly likely where, in use, the set rivet assembly will be subject to vibration and the mandrel may become worked loose from the rivet sleeve.

A further problem with both closed or open ended rivet assemblies using a sealing washer between a workpiece and the rivet flange, is the possibility of the washer being omitted or missed from the assembly by the user, since the washers may become separate from the rivet assemblies during transport.

It is an object of the invention to provide an improved sealing assembly that has an increased grip range and provides efficient sealing from a smaller number of parts.

According to the invention, a blind rivet assembly comprises a mandrel, a rivet sleeve and a plastics moulding, the mandrel having a head, a breakneck portion and a pulling stem; the rivet sleeve having a flange at one end and a plurality of slots extending from the flange along the rivet sleeve; and the plastics moulding being moulded about the rivet sleeve, filling the rivet sleeve slots, characterised in that the mandrel is separated from the rivet flange by the plastics moulding.

The mandrel is preferably secured to the end of the rivet sleeve remote from the rivet flange. Conveniently it may be press fit therein.

The plastics moulding is preferably provided with a thin flexible skirt.

The invention will now be described, by way of example only, with reference to the accompanying drawings, in which
Figure 1 shows a side view of a rivet assembly according to the invention in section;
Figure 2 shows a section of the assembly of Figure 1 along the line 2-2; and
Figure 3 shows a view similar to Figure 1 showing the assembly in a set condition.

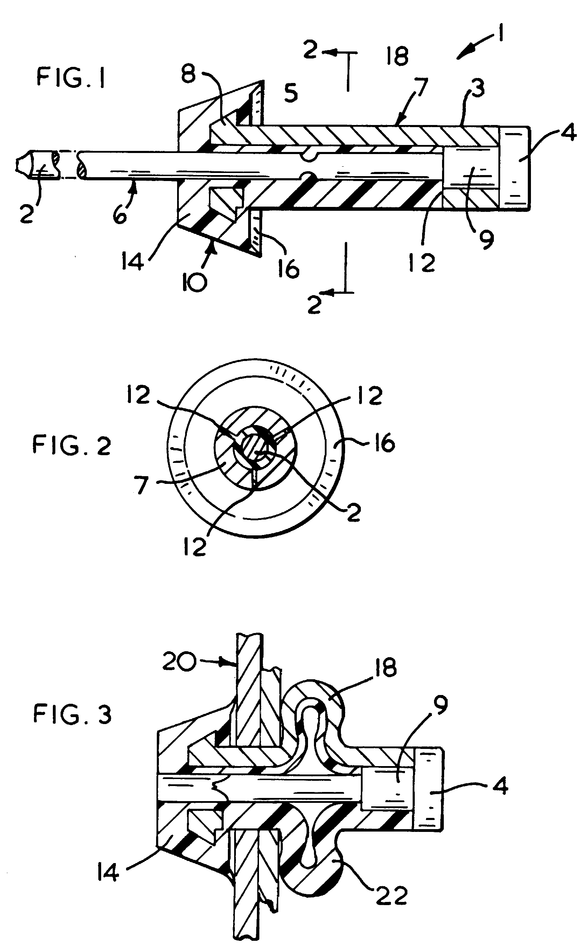

Referring to Figure 1, there is shown a rivet assembly 1 comprising a mandrel 2, a rivet sleeve 3 and a plastics moulding 10. The mandrel comprises a mandrel head 4, a breakneck portion 5 and a pulling stem 6. The sleeve 3 comprises a generally tubular shank 7 with a flange 8 at one end. The end remote from the flange 8 is open. The mandrel passes through the sleeve such that the mandrel head 4 abuts the open end of the rivet sleeve. The diameter of the pulling stem 6 is less than the internal diameter of the shank 7 of the sleeve 3. The diameter of the pulling stem 6, except for the breakneck is substantially constant along its length.

In the present invention the mandrel between the mandrel head and the breakneck portion has a portion 9 of greater diameter than the pulling stem. This portion is of a similar diameter to the internal diameter of the sleeve 3 and is press fit therein.

The shank 7 of the sleeve is provided with a number of holes or slots 12 extending from the flange 8 along the shank 7, dividing the shank into leg portions 18.

The plastics moulding 10 is formed on a preassembled mandrel/sleeve assembly. The moulding 10 forms a head 14 about the flange 8. The moulding extends between the mandrel and the rivet sleeve from the head 14 along the mandrel to the portion 9 of the mandrel of greater diameter, filling the breakneck portion of the mandrel and the slots 12. The head 14 is conveniently formed with a skirt 16 which forms a seal on the operator's side of the workpiece. Thus it can be seen that the moulding 10 is in intimate contact with both the rivet sleeve 3 and the mandrel 2.

To set the rivet, the rivet is placed in a hole in a workpiece assembly 20. It will be understood that this may comprises one or more individual workpieces. The head of the moulding is held against the assembly by a setting tool, the jaws of which grasp and pull the pulling mandrel. The mandrel moves towards the moulded head shearing the plastics in the breakneck portion from the rest of the moulding and causes the legs of the rivet sleeve to deform. The pulling member subsequently fractures at the breakneck region. The deformation of the leg portions 18 results in a degree of hole filling within the workpiece and also serves to secure the rivet assembly to the workpiece assembly. The force required to deform the plastics material 22 within the slots 12 is far less than that required to deform the rivet sleeve, and so the presence of the plastics material does not affect the setting characteristics of the rivet assembly. However, even after setting the close contact between the mandrel and the plastics material between the mandrel and the rivet sleeve serves to seal effectively this path to ingress of moisture.

## Claims

1. A blind rivet assembly comprising a mandrel, a rivet sleeve and a plastics moulding, the mandrel having a mandrel head, a breakneck portion and a pulling stem; the rivet sleeve having a flange at one end and a plurality of slots extending from the flange along the rivet sleeve; and the plastics moulding being moulded about the rivet sleeve filling the rivet sleeve slots wherein the mandrel is separated from the flange by the plastics moulding.

2. A rivet assembly according to Claim 1, wherein the mandrel is received in an end of the rivet sleeve remote from the flange.

3. A rivet assembly according to Claim 1 or Claim 2, wherein the plastics moulding is provided with a thin flexible skirt.
